# EUROPÄISCHE PATENTSCHRIFT

(11) **EP 2 327 571 B1**
(45) Veröffentlichungstag und Bekanntmachung des Hinweises auf die Patenterteilung: **28.05.2014**
(21) Anmeldenummer: 10014683.6
(22) Anmeldetag: 17.11.2010
(51) Int. Cl.: B60F 5/02, B64C 37/00, B62J 17/08, B62K 13/00

(54) **Mit einem einspurigen Straßenfahrzeug koppelbares Fluggerät**
Flying device capable of being coupled with a single track road vehicle
Aéronef pouvant être couplé à un véhicule routier à une voie

(30) Priorität: 27.11.2009 DE 102009056137
(43) Veröffentlichungstag der Anmeldung: 01.06.2011
(73) Patentinhaber: Farrag, Rainer, 6922 Wolfurt (AT)
(72) Erfinder: Farrag, Rainer, 6922 Wolfurt (AT)
(74) Vertreter: Riebling, Peter

(56) Entgegenhaltungen:
- DE-A1- 2 438 526
- DE-C- 760 791
- FR-A- 994 341
- FR-A- 1 265 234
- GB-A- 2 455 362
- JP-A- 2004 082 748
- US-A- 2 593 785
- US-A- 2 619 301
- US-A- 2 770 427
- US-A- 4 358 072

## Beschreibung

Gegenstand der Erfindung ist ein mit einem einspurigen Straßenfahrzeug koppelbares Fluggerät nach dem Oberbegriff des Patentanspruches 1.

Einspurige Fluggeräte, die aus einem Straßenfahrzeug verwandelbar sind, sind beispielsweise mit dem Gegenstand der DE 2357628 A1 bekannt geworden. Dort ist an einem Motorrad teleskopartig auf jeder Seite ein Flügel angesetzt, der in Verbindung mit einem Leitwerk ein Fluggerät erzeugen soll.

Die Flügel sind teleskopierbar ausziehbar, um so die erforderliche Tragfähigkeit des daraus gestalteten Fluggerätes zu erreichen.

Die Anordnung von teleskopartig ausziehbaren Flügeln an einem Straßenfahrzeug ist jedoch praktisch nicht verwirklichbar, denn sie haben nicht die erforderliche Tragfähigkeit während des Flugbetriebes, und die Längsführung und Verriegelung der einzelnen Teleskopteile ist so schwierig, dass daraus kein funktionierendes Fluggerät erzeugt werden kann.

Weiterer Nachteil ist, dass es keine Kopplung zwischen dem Fluggerät und einem Straßenfahrzeug gibt, weil das Straßenfahrzeug nur als Fluggerät umwandelbar ist, nicht aber mit ihm koppelbar ist.

Der Anbau aller Flugteile an das Straßenfahrzeug nach der DE 2357628 A1 hat jedoch den Nachteil, dass das Straßenfahrzeug im Straßenverkehr damit schwer manövrierbar ist, unbequem zu fahren ist, und außerdem hat es ein beträchtliches Gewicht, was einen Einsatz auf der Straße erschwert.

Überdies ist das Straßenfahrzeug aber auch das als Fluggerät umwandelbare Straßenfahrzeug nicht durch eine Kabine geschützt, sodass der Fahrer vollkommen im Freien sowohl während des Straßenbetriebes als auch während des Flugbetriebes sitzt. Damit ist eine beträchtliche Unfallgefahr gegeben.

Aus der genannten Druckschrift ergibt sich auch keine technische Lehre, wie ein Flugantrieb auszusehen hätte, weil ein Flugantrieb bei diesem Straßenfahrzeug überhaupt fehlt.

Daher muss davon ausgegangen werden, dass ein solches Fahrzeug nicht flugtauglich ist, zumal auch die Angabe, wie die einzelnen Flugbedienungselemente angeordnet sind, fehlen.

Mit dem Gegenstand der DE 101 59 082 A1 ist ein mehrspuriges Fahrzeug bekannt geworden, welches ebenfalls aus einem mehrspurigen Landfahrzeug ein flugfähiges Fluggerät erzeugen soll.

Nachteil bei dieser Anordnung ist jedoch wiederum, das Landfahrzeug nur durch Anbau und Umbau von Teilen zu einem Fluggerät umgewandelt werden kann, d. h., das Landfahrzeug führt sämtliche für den Flugbetrieb notwendigen Teile mit sich und sieht keine Kopplung zwischen dem Landfahrzeug und dem Fluggerät vor.

Dies ergibt sich auch daraus, dass der gleiche Antriebsmotor für das Straßenfahrzeug auch für den Schubpropeller verwendet wird, was dazu führt, dass nur eine geringe Leistung für den Flugbetrieb möglich ist.

Nach den Luftverkehrsvorschriften ist es im Übrigen bedenklich, einen für den Straßenbetrieb ausgelegten Antriebsmotor gleichzeitig auch als Flugmotor zu verwenden, weil für die Verwendung als Flugmotor hohe Qualitätsanforderungen zu erfüllen sind, relativ kurze Wartungsintervalle einzuhalten sind und hochwertige Prüfungen und Überholungen notwendig sind, die für einen Motor eines Straßenfahrzeuges nicht notwendig sind.

Mit dem Gegenstand der DE 197 49 647 C2 ist ein mehrspuriges Straßenfahrzeug in Form eines Busses oder eines Autos angegeben, wobei jedoch auch ein einspuriges Straßenfahrzeug gemäß Figuren 8 und 9 vorgesehen sein kann, an dem klappbar die Flügel und Gleitwerke angeordnet sind. Auch hier besteht der Nachteil, dass das Straßenfahrzeug alle für den Flugbetrieb notwendigen Teile (Flügel, Flugmotor, Höhen-, Seitenleitwerk und alle anderen Steuerungsinstrumente) mit sich während des Straßenbetriebes führen muss, was zu einer unzulänglichen Betriebsweise während des Straßenbetriebes führt.

Die gleiche Kritik gilt im Übrigen auch für die DE 102 21 304 A1, die ebenfalls ein Straßenfahrzeug offenbart, welches mit klappbaren Flugteilen ausgerüstet ist.

Mit der Offenlegungsschrift DE 24 38 526 wird ein motorisch angetriebenes, zum Fliegen geeignetes Zwei- bzw. Dreirad gezeigt. Die Druckschrift zeigt ein Fahrzeug, das sowohl als Straßen-, als auch Luftfahrzeug geeignet ist und zwei koppelbare Einheiten umfasst, wobei eine erste Einheit an ein mindestens einspuriges Straßenfahrzeug und die zweite Einheit als Fluggerät ausgebildet ist und das Fluggerät an seinem vorderen freien Ende eine Koppelvorrichtung aufweist. Nachteil bei diesem bekannten Straßenfahrzeug ist jedoch, dass der Fahrer im Straßenverkehr stets einen Helm tragen muss, da es sich bei dem einspurigen Fahrzeug um ein normales Motorrad handelt, für welches eine Helmpflicht besteht. Des Weiteren muss der Fahrer, sowohl auf der Straße, als auch in der Luft stets witterungsfeste Kleidung tragen, da das Fahrzeug keine Kabine aufweist. Des Weiteren besteht der Nachteil, dass das Fluggerät relativ schwer zu bedienen ist, weil keine Trennung der Bedienelemente für das Fluggerät, sowie für das Straßenfahrzeug vorgesehen ist. Auch kann nur ein einziges bauartgleiches Fluggerät mit dem Straßenfahrzeug gemäß der Druckschrift gekoppelt werden, was ein weiterer Nachteil mit sich bringt, da damit keine universelle Kopplung wie zum Beispiel mit einem Hubschrauber oder einem Tragflächengleitflieger möglich ist.

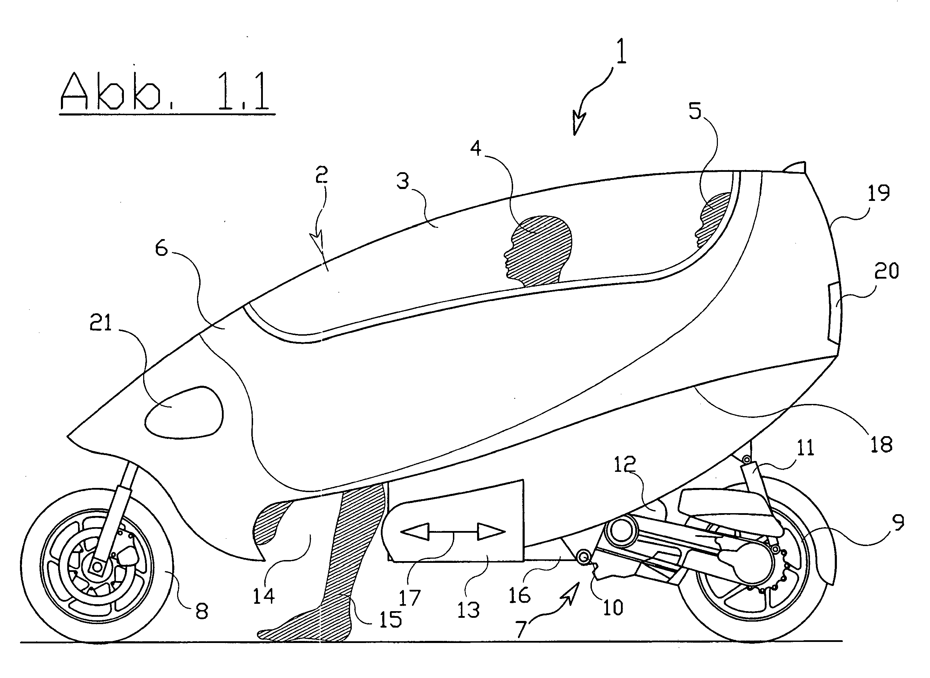

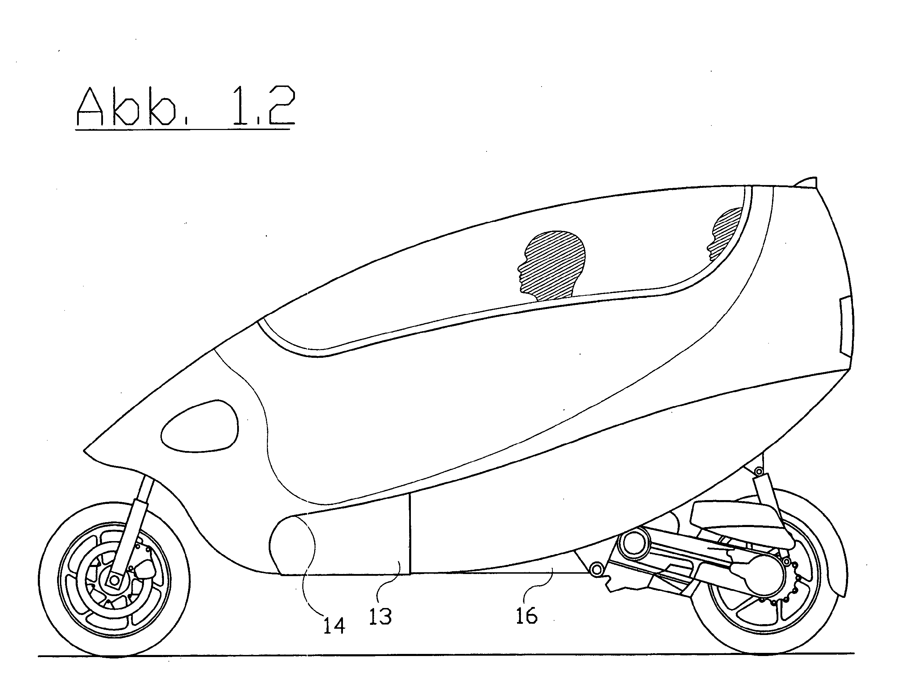

Mit der Druckschrift US 2,619,301 A wird ein mehrspuriges Straßenfahrzeug gezeigt, welches mit einem Fluggerät koppelbar ist. Gemäß den Figuren 1-3 wird das Fluggerät mit den dazugehörigen Bedienelementen von oben durch eine Art Dachluke auf das Straßenfahrzeug aufgesetzt. Durch die dachseitige Montage bekommt das Straßenfahrzeug jedoch eine relativ schlechte Schwerpunktsverteilung, da das Fluggerät einen zusätzlichen dachseitigen Antriebsmotor aufweist.

Die gleiche Kritik gilt auch für die Druckschrift DE 760 791, welche ein Kraftwagen oder Dergleichen mit abnehmbarer Flugzeugtragfläche offenbart. Hierbei wird an einem mehrspurigen Fahrzeug im Dachbereich ein Fluggerät angekoppelt, was den wesentlichen Nachteil aufweist, dass die Dachstruktur des Straßenfahrzeuges sehr stabil ausgebildet sein muss, um die hohen Kräfte des Fluggerätes aufzunehmen.

Auch die Druckschrift US 2,593,785 zeigt ein mehrspuriges Straßenfahrzeug, welches im Dachbereich ein Fluggerät aufweist. Auch hier besteht der Nachteil, dass der Dachbereich des Straßenfahrzeuges zusätzlich ausgesteift werden muss, um die hohen Tragkräfte des Fluggerätes aufzunehmen.

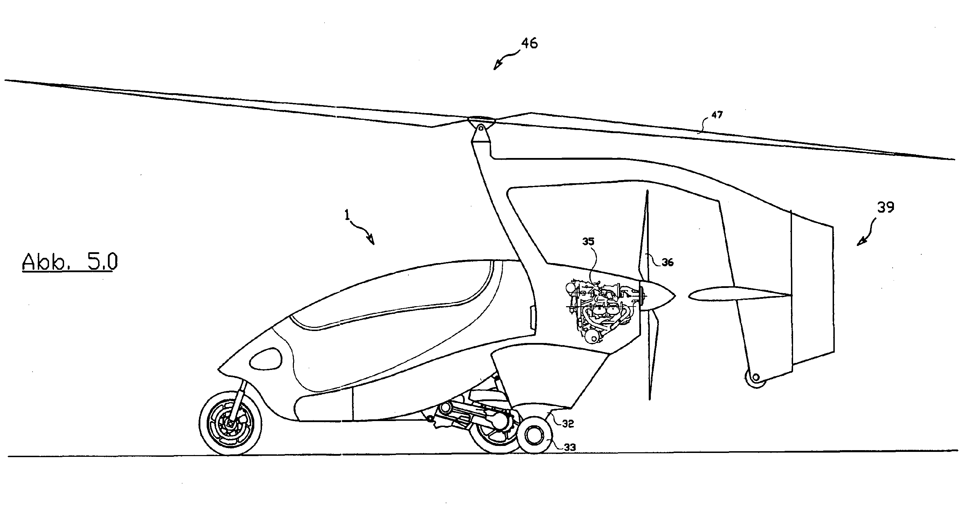

Mit der gattungsbildenden Druckschrift US 2,770,427 wird ein mehrspuriges Straßenfahrzeug gezeigt, welches über eine Koppelvorrichtung mit einem Fluggerät verbunden werden kann. Ein wesentlicher Nachteil bei der Ausführungsform gemäß der vorliegenden Druckschrift ist, dass das Straßenfahrzeug mehrspurig ausgebildet ist und somit schwer im dichten Straßenverkehr zu bewegen ist. Darüber hinaus sind alle Ausführungsformen dachlos ausgebildet. Erst beim Ankoppeln des Fluggerätes wird eine Abdeckhaube mit Instrumenten und Bedienelementen für das Fluggerät über das Auto montiert wird. Ein weiterer Nachteil besteht darin, dass das Fluggerät keinen eigenen Antriebsmotor aufweist, sondern gemäß Figur 5 über eine Antriebswelle (24) mit dem Motor des Straßenfahrzeuges gekoppelt wird.

Mit dem Gegenstand der FR 994.341 A wird ein mehrspuriges Straßenfahrzeug von hinten und oben mit einem Fluggerät gekoppelt, was wiederum mit dem Nachteil einer ungünstigen Schwerpunktverteilung verbunden ist.

Mit der Druckschrift US 4,358,072 wir ein mehrspuriges Straßenfahrzeug gezeigt, welches mit einem Fluggerät von hinten und unten gekoppelt wird. Bei dieser Ausführungsform erfolgt eine mittige Kopplung des Fluggerätes bei dem mehrspurigen Straßenfahrzeug, wobei das Fluggerät im vorderen Bereich alle Bedienelemente aufweist, welche von unten in die Kabine des mehrspurigen Fahrzeuges bei der Ankopplung eingeschränkt werden. Ein wesentlicher Nachteil besteht jedoch hierin, dass das Straßenfahrzeug mehrspurig ausgebildet ist und dadurch ein relativ hohes Gewicht aufweist. Des Weiteren lässt sich ein mehrspuriges Fahrzeug nur schwer im dichten Straßenverkehr bewegen. Ein weiterer Nachteil besteht darin, dass die hintere, obere Tragstruktur des Straßenfahrzeuges so stark verstärkt werden muss, dass ein Tragen des Fluggerätes am hinteren Teil gewährleistet ist.

Mit der Druckschrift FR 1.265.234 A wird ein mehrspuriges Straßenfahrzeug mit einem Hubschrauber gekoppelt. Das Fluggerät wird hierbei von hinten an das Straßenfahrzeug gekoppelt, wobei die notwendigen Bedienelemente für das Fluggerät von unten in das Fahrzeug eingeschwenkt werden.

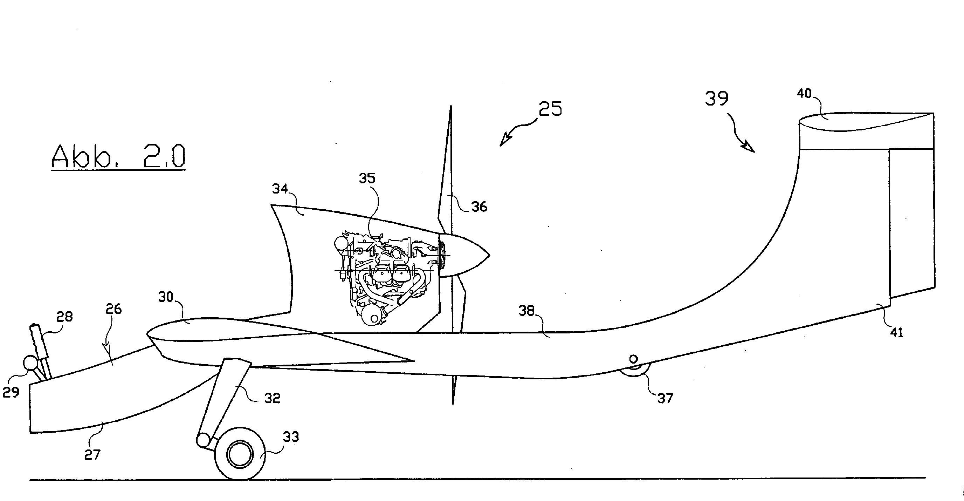

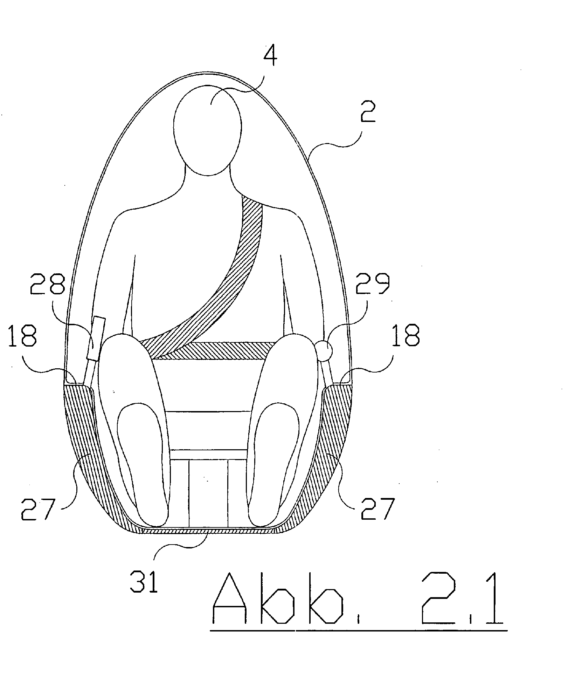

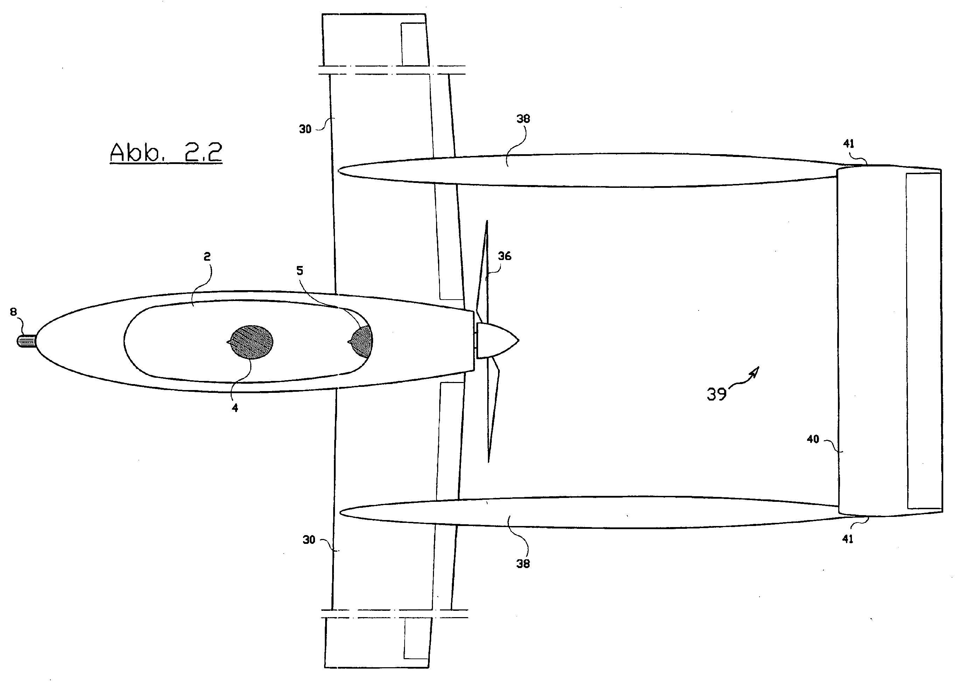

Mit der Druckschrift GB 2 455 362 A wird ebenfalls ein mehrspuriges Straßenfahrzeug gezeigt, welches über eine obere, hintere Kopplung mit einem Fluggerät verbunden wird. Gemäß der Figur 2 findet die Kopplung lediglich im hinteren, oberen Bereich des Straßenfahrzeuges statt, wodurch eine ungünstige Schwerpunktsverteilung erreicht wird.

Der Erfindung liegt deshalb die Aufgabe zugrunde, ein mit einem Straßenfahrzeug koppelbares Fluggerät zu schaffen, welches als leichtes Flugzeug ausgebildet ist und welches im Straßenverkehr besonders gut zu fahren ist und ein dementsprechend geringes Gewicht aufweist.

Zur Lösung der gestellten Aufgabe ist die Erfindung durch die technische Lehre des Anspruches 1 gekennzeichnet.

In Weiterbildung der Erfindung ist vorgesehen, dass ein einspuriges Straßenfahrzeug mit einem Fluggerät koppelbar ist und dass sowohl dem Straßenfahrzeug ein eigener Antriebsmotor als auch dem Fluggerät ein eigener Antriebsmotor zugeordnet sind.

Mit der gegebenen technischen Lehre ergibt sich der wesentliche Vorteil, dass aufgrund der Kopplung eines Straßenfahrzeuges mit einem Fluggerät nun erstmals die Möglichkeit besteht, das Straßenfahrzeug alleine auf der Straße zu betreiben, ohne im Wesentlichen die für den Flugbetrieb notwendigen Teile mit sich führen zu müssen. Dies führt dazu, dass ein besonders leichtes und auch leicht zu manövrierendes Straßenfahrzeug geschaffen wird.

Hierbei ist erfindungsgemäß vorgesehen, dass, das Straßenfahrzeug einspurig ausgebildet ist, d. h., es ist in der Art eines Leichtkraftrades, eines Mopeds oder eines Motorrades ausgebildet.

Damit ergibt sich der wesentliche Vorteil, dass es besonders einfach auf der Straße zu bewegen ist, es kann leicht auch quer in Parklücken eingeparkt werden, weil seine Länge sehr kurz ist. Nach der vorliegenden Erfindung ist es vorgesehen, dass dieses Straßenfahrzeug, welches einspurig ausgebildet ist, eine Fahrkabine aufweist, welches dem oberen Teil des Straßenfahrzeuges möglichst umfassend verkleidet und umschließt.

Damit ergibt sich der Vorteil, dass zwei Personen in einem einspurigen Straßenfahrzeug voll verkleidet und gegen Witterung geschützt mitfahren können.

Diese zwei Personen (Fahrer und Beifahrer) sitzen dann auf eigenen Sitzen mit Rückenlehne und sind angegurtet, was an und für sich bei einspurigen Straßenfahrzeugen sonst nicht möglich ist.

Bei einem solchen einspurigen Straßenfahrzeug besteht die Notwendigkeit im Straßenbetrieb, dass dieses Fahrzeug auch im Stillstand abgestützt werden kann, anderenfalls es umfallen würde.

Nachdem bevorzugt die Fahrkabine auch den unteren Teil des Straßenfahrzeuges umgibt, muss eine Möglichkeit geschaffen werden, das Straßenfahrzeug vor dem Umkippen zu bewahren, wenn es eine bestimmte Mindestgeschwindigkeit unterschreitet.

Zu diesem Zweck sieht die Erfindung vor, dass in der Bodenseite der Fahrkabine eine Öffnung angebracht ist, durch welche der Fahrer die Möglichkeit hat, sein Bein nach unten auszustrecken und als Stützbein auf der Straße aufzustützen.

Wenn jedoch das Straßenfahrzeug eine höhere Geschwindigkeit von beispielsweise mehr als 10 km/h erreicht, sollte möglichst diese Öffnung verschlossen sein.

Zu diesem Zweck sieht die Erfindung eine in der Bodenseite der Fahrkabine angeordnete und in Längsrichtung des Straßenfahrzeuges verschiebbar ausgebildete Verschlussklappe vor, die beispielsweise in einer Geschwindigkeit von weniger als 10 km/h sich automatisch öffnet und bei einer Geschwindigkeit von mehr als 10 km/h sich schließt.

Um bei einem Nothalt zu ermöglichen, dass die Verschlussklappe sich schlagartig öffnet, ist es vorgesehen, dass diese federbelastet in der Verschlussstellung gehalten wird, und wenn ein Nothalt eintritt oder ein plötzlicher Geschwindigkeitsabfall eintritt, wird die Federkupplung gelöst, und die Verschlussklappe wird schlagartig in die Offenstellung gefahren.

Wichtig bei der Erfindung ist also, dass in der Bodenseite der Fahrkabine eine Öffnung freigebende Verschlussklappe angeordnet ist, die federbelastet in der Schließstellung gehalten wird und die unter Federlast schlagartig in die Offenstellung gefahren werden kann.

Dieses Fahren in die Offenstellung kann unter dem Einfluss von Sensoren oder anderen Auslösemechanismen geschehen.

Zur vorliegenden Erfindung bleibt es offen, ob bei dem einspurigen Straßenfahrzeug ein Vorder- oder Hinterradantrieb mit dem des Straßenfahrzeuges zugeordneten Antriebsmotor erfolgt. Es wird selbstverständlich bevorzugt ein Hinterradantrieb verwendet, wie er bei Motorrädern oder Kleinkrafträdern üblich ist, wobei für den besseren Straßenkomfort eine Hinterradschwinge für das Hinterrad vorgesehen ist, die gefedert und mit einem Stoßdämpfer versehen ist, um einen möglichst angenehmen Fahreindruck zu erzeugen.

Das Vorderrad ist in an sich bekannter Weise über Stoßdämpfer abgestützt, abgefedert und lenkbar ausgebildet.

Erfindungsgemäß ist vorgesehen, dass die Fahrkabine möglichst vollflächig abgedeckt ist und demzufolge auch bodenseitig geschlossen ist, wobei - entsprechend der vorhergehenden Beschreibung - bodenseitig lediglich eine Verschlussklappe vorhanden ist und ansonsten der Boden des Straßenfahrzeuges geschlossen ist.

Um ein Ein- und Aussteigen der Passagiere zu ermöglichen, ist es vorgesehen, dass die Fahrkabine ein oder mehrere Einstiegstüren aufweist, wobei diese Türen in beliebiger Weise geöffnet und geschlossen werden können.

Es kann hierbei eine Schwenkachse vorgesehen sein, die parallel zur Längsachse des Straßenfahrzeuges ausgerichtet ist, um insgesamt den oberen Teil der Fahrkabine seitlich abzuklappen und den Innenraum des Straßenfahrzeuges zugänglich zu machen.

Ebenso können in der Art von Schmetterlingstüren nunmehr zwei Türen links und rechts an der Fahrkabine angesetzt sein und nach oben um jeweils eine horizontale Schwenkachse verschwenkbar sein.

Es gibt also eine Vielzahl von Möglichkeiten, um den Innenraum der Fahrkabine für den Ein- und Ausstieg der Passagiere zugänglich zu machen.

Für die Ausbildung des Fluggerätes gibt es verschiedene Möglichkeiten. In einer ersten Ausgestaltung der Erfindung kann das Fluggerät einen Schubpropeller aufweisen, der von einem eigenen Flugantrieb angetrieben wird. Dieser Flugantrieb kann entweder ein Kolben-Verbrennungsmotor sein, ein Drehkolbenmotor oder auch eine Strahlturbine.

Ebenso können sämtliche Hybridantriebe verwendet werden.

Bei der Kopplung zwischen dem Straßenfahrzeug und dem Fluggerät ist wichtig, dass die Kopplung besonders einfach und sicher erfolgt. Zu diesem Zweck ist vorgesehen, dass das Fluggerät an seinem vorderen freien Ende eine Koppelvorrichtung aufweist, welche geeignet ist, mit bestimmten Teilen des Straßenfahrzeuges festgekoppelt und verbunden zu werden.

Auf die Einzelheiten dieser Koppelvorrichtung wird anhand des speziellen Beschreibungsteiles eingegangen werden.

In einer anderen Ausgestaltung der Erfindung kann es vorgesehen sein, dass das Fluggerät, welches als Drehflügler ausgebildet ist, d. h. es hat einen Drehflügel, der nicht angetrieben ist und der lediglich durch den Fahrtwind und den Vorschub sich dreht. Auch hier ist eine Luftschraube vorhanden, die als Schubschraube ausgebildet ist und der ein geeigneter Flugantrieb zugeordnet ist.

In einer dritten Ausgestaltung kann es vorgesehen sein, dass das Fluggerät als Hubschrauber ausgebildet ist, der einen angetriebenen Rotor aufweist, in Verbindung mit einem gleichfalls angetriebenen Heckrotor.

Vorteil der Erfindung ist, dass nun ein Straßenfahrzeug, welches gut für die Straße ausgebildet ist, weil es leicht ist und leicht manövrierbar ist, mit einem beliebigen Fluggerät gekoppelt werden kann. Es besteht der Vorteil, dass nicht ein einziges Fluggerät dem Straßenfahrzeug zugeordnet werden kann, sondern das Straßenfahrzeug kann mit verschiedenartigen Typen von Fluggeräten gekoppelt werden. Diese Typen wurden oben stehend beschrieben.

Das Straßenfahrzeug muss also keine für den Flug notwendigen Teile mit sich führen und die für den Flugbetrieb notwendigen Teile sind alle im Fluggerät integriert, einschließlich Steuerknüppel und Gashebel, die nach dem Ankoppeln des Fluggerätes an das Straßenfahrzeug so in dem Straßenfahrzeug integriert werden, dass der Fahrer des Straßenfahrzeuges nun leicht diese Bedienungselemente bedienen kann.

Für den Flugbetrieb notwendige Fluginstrumente werden in dem Straßenfahrzeug angeordnet und über eine elektrische Verbindungseinrichtung mit dem Fluggerät gekoppelt, sobald dieses mit dem Straßenfahrzeug verbunden ist. Auf diese Weise werden alle Flugdaten an einem geeigneten Monitor im Straßenfahrzeug angezeigt und können über bestimmte Bedienungselemente bedient werden. Durch die Vollverkleidung des Straßenfahrzeuges entfällt eine Helmpflicht für die Passagiere, weil diese geschützt in der Fahrkabine sind.

Weiterhin besteht der Vorteil, dass nun mit einem Straßenfahrzeug zu einem beliebigen Flugplatz gefahren werden kann und an diesem Flugplatz ein dort vorrätig gehaltenes Fluggerät gemietet werden kann, was mit dem Straßenfahrzeug koppelbar ist.

Auf diese Weise wird ein universell verwendbares und ständig für die Benutzung des Fahrers geeignetes Straßenfahrzeug vorgeschlagen, welches nach Belieben mit verschiedenen Fluggeräten gekoppelt werden kann.

Ein solches Kombinationsfluggerät, welches aus einem Straßenfahrzeug und aus einem Fluggerät besteht, ist auch für militärische Zwecke sehr gut geeignet, weil mit diesem sehr leichten Fluggerät an entfernten Stellen gelandet werden kann, dann der Flugteil abgekoppelt wird und mit dem leichtgängigen Straßenfahrzeug weiter operiert werden kann.

Das Straßenfahrzeug kann auch mit Waffen bestückt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Abb. 1:: schematisiert die Seitenansicht eines Straßenfahrzeuges nach der Erfindung mit der bodenseitigen Verschlussklappe in Offenstellung
- Abb. 1.2:: das Straßenfahrzeug nach Figur 1 mit der Durchgangsklappe in Schließstellung
- Abb. 2:: dem Straßenfahrzeug zugeordnetes Fluggerät
- Abb. 2.1:: das Straßenfahrzeug im Ankopplungszustand mit dem Fluggerät
- Abb. 2.2: die Draufsicht auf das Fluggerät, welches mit einem Straßenfahrzeug gekoppelt ist.
- Abb.3.1:: der Kopplungsvorgang zwischen dem Straßenfahrzeug und dem Fluggerät
- Abb. 3.2:: der weitere Fortschritt des Kopplungsvorganges der beiden Elemente gemäß Abbildung 3.1
- Abb.: 3.3: das fertig gekoppelte Leichtflugzeug, welches aus dem Straßenfahrzeug und dem Fluggerät besteht
- Abb. 4:: die Darstellung, dass das Fluggerät mit einer Plane abgedeckt werden kann und an beliebigen Stellen abgestellt werden kann
- Abb. 5:: eine zweite Ausführungsform eines fähigen Apparates in der Ausbildung als Drehflügler
- Abb. 6:: eine dritte Ausführungsform eines Flugapparates in der Ausbildung als Hubschrauber

Die Erfindung ist ein einspuriges Fahrzeug mit einer weitgehend geschlossenen Kabine, das auch bei schlechtem Wetter gefahren werden kann.

Abbildung 1: Ein einspuriges Fahrzeug mit Kabine für Fahrer und Beifahrer. Die Kabine ist mit 2 seitlichen Öffnungen unten vorne vorgesehen.

Der Boden im vorderen Bereich ist offen, sodass der Fahrer mit den Beinen das Fahrzeug in stehender Position stützen kann.

Fahrer und Beifahrer sitzen hintereinander, angegurtet auf Sitzen mit Rückenlehnen in der Kabine (Helmpflicht entfällt). Damit können auch Kinder (im Kindersitz) befördert werden. Die für den Straßenverkehr erforderlichen Instrumente sind im Fahrzeug installiert. Das Fahrzeug kann mit Fluginstrumenten nachgerüstet werden, sodass es auch nach dem Ankoppeln mit einem Fluggerät zum Fliegen geeignet ist.

Abbildung 2: Ein Fluggerät (ohne Passagierkabine), bestehend aus 2 Tragflächen, Flugantrieb, 2 Seitenleitwerken und einem Höhenleitwerk

Das Höhenleitwerk verbindet im hinteren Bereich die 2 Seitenleitwerke, die mittels 2 Verbindungsholmen mit den Tragflächen verbunden sind.

Ein Fahrwerk ist unter beiden Tragflächen für Landung und Bodenmanöver installiert, eine Luftschraube wird am Triebwerk, falls notwendig, installiert. 2 Andockseitenholme verbinden die Tragflächen mit dem Antriebsraum und beinhalten alle Flugsteuerhebel.

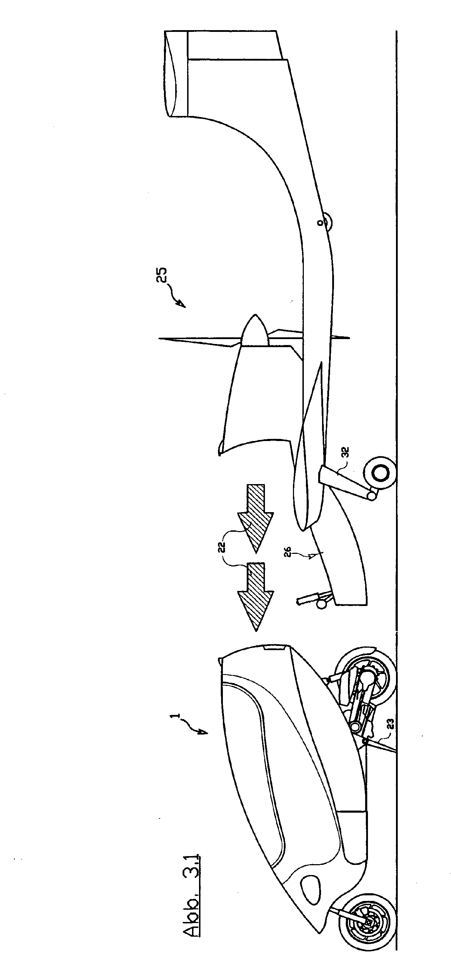

Abbildung 3.1: Das Fahrzeug wird auf einem Ständer aufrecht gestellt und der Boden im vorderen Bereich des Fahrzeugs wird mit einer Verschlussplatte geschlossen. Das Fluggerät wird hinter das Fahrzeug geschoben.

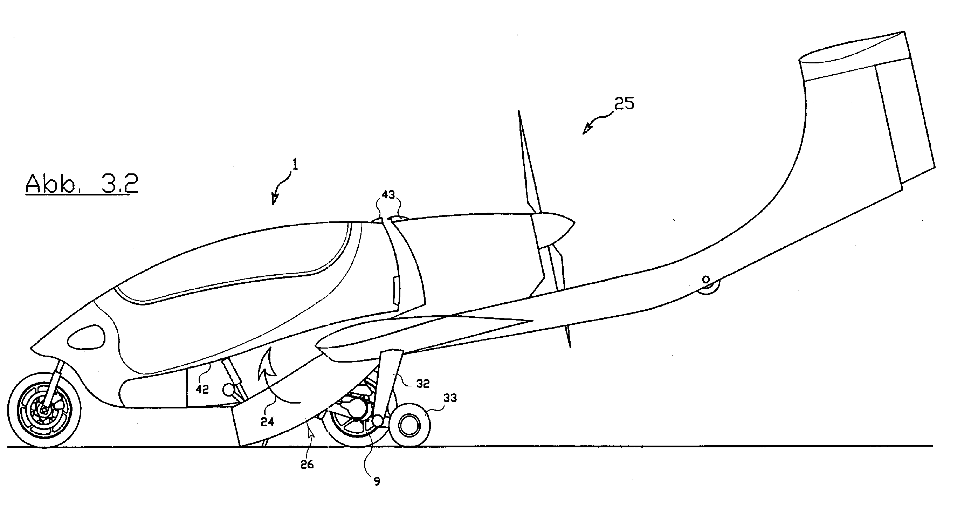

Abbildung 3.2: Das Flugzeug wird weiter nach vorne geschoben und die Flugsteuerhebel werden durch die 2 seitlichen Öffnungen des einspurigen Fahrzeuges innerhalb der Kabine angepasst.

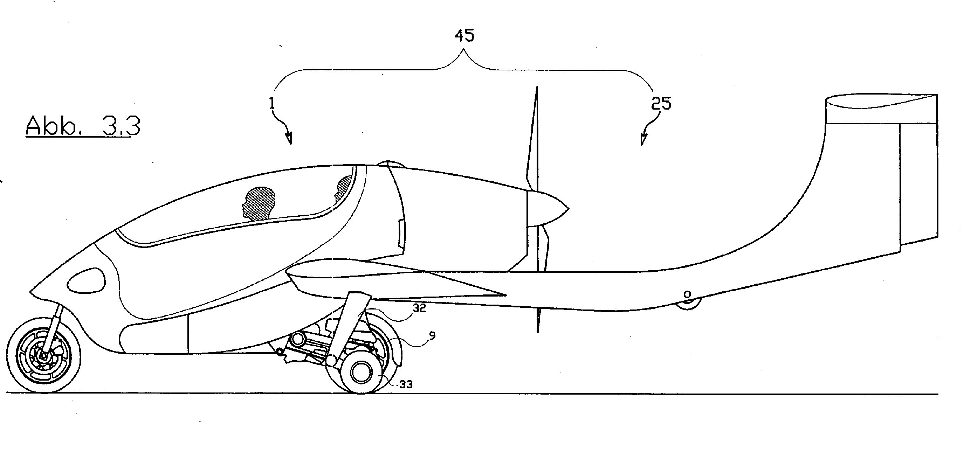

Abbildung 3.3: Das Fluggerät wird mit dem Fahrzeug durch die 2 Andockseiten verbunden und der Parkständer am Fahrzeug wird hochgeklappt. Die

Andockseiten decken die Seitenöffnungen am Fahrzeug ab und sorgen dafür, dass das Fluggerät und das Fahrzeug miteinander fest verbunden sind.

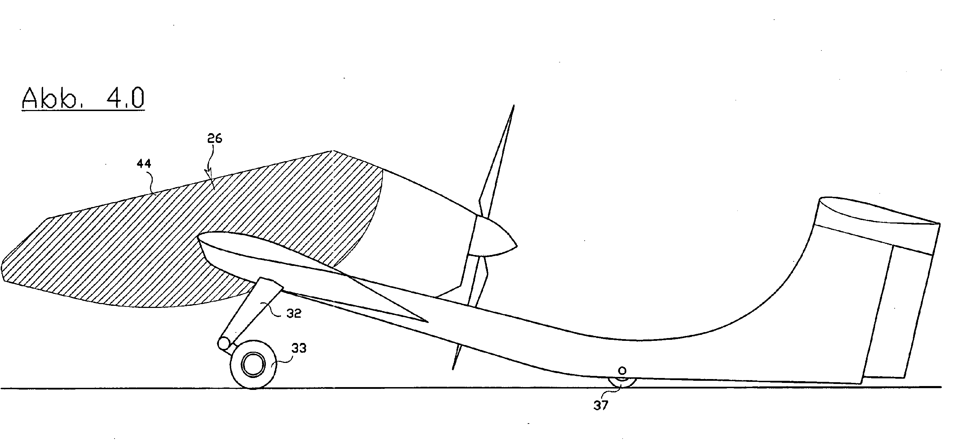

Abbildung 4: Das Fluggerät kann, nach Abkopplung vom Fahrzeug am Flughafen mit einer Plane abgedeckt und geparkt werden, während das Fahrzeug für Fahrten im Straßenverkehr verwendet wird.

Abbildung 5: Das einspurige Fahrzeug kann auch an einen Gyrocopter (ohne Kabine), wie in Abbildungen 1 bis 4, gekoppelt werden.

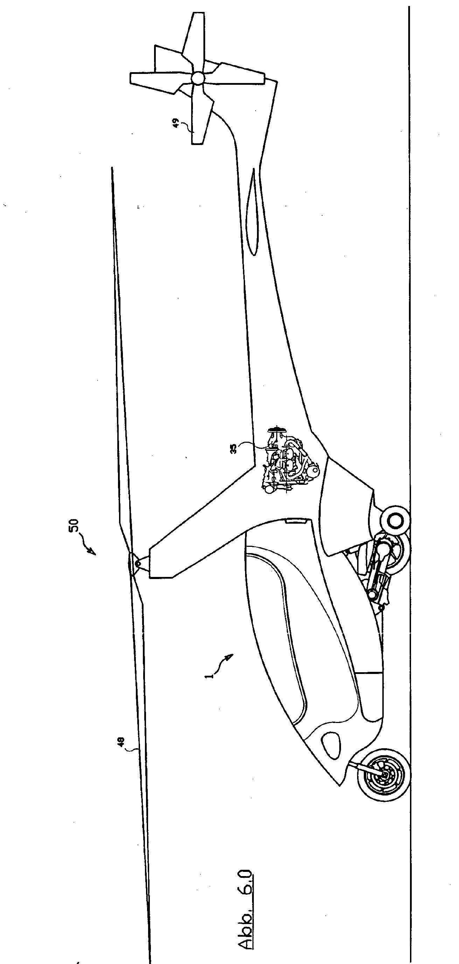

Abbildung 6: Einspuriges Fahrzeug mit einer Koppelung an einen Hubschrauber (ohne Kabine), wie in Abbildung 1 bis 5m gekoppelt werden.

In der Abbildung 1.1 ist allgemein ein Straßenfahrzeug 1 dargestellt, welches einspurig ausgebildet ist.

In der einspurigen Ausbildung des Straßenfahrzeuges ergibt sich nämlich der Vorteil, dass ein besonders leichtes Straßenfahrzeug geschaffen wird, welches demzufolge geeignet ist, mit einem leichten Fluggerät gekoppelt zu werden, sodass es in der Ultraleichtklasse nach EU-Vorschriften betrieben werden kann. Eine solche EU-Vorschrift sieht gegenwärtig vor, dass ein Abfluggewicht von 472 kg nicht überschritten werden darf, und durch die Ausbildung des Straßenfahrzeuges als einspuriges Fahrzeug und ein besonders leichtes Fluggerät 25 wird diese Anforderung erfüllt. In den USA gelten die "Sport Pilot Category" und die "Light Sport Aircraft" Regeln.

Durch Erfüllung dieser Anforderung ergibt sich nämlich der weitere Vorteil, dass ein solches Fluggerät sehr leicht geflogen werden kann, dass für den Betrieb des Straßenfahrzeuges lediglich ein Motorradführerschein oder ein PKW-Führerschein benötigt wird und dass für den Betrieb als Flugapparat eine erschwerte Tauglichkeitsprüfung, wie sie sonst für Sportflugzeuge notwendig ist, nicht erforderlich ist.

Das Straßenfahrzeug 1 weist im Wesentlichen eine Fahrkabine 2 auf, wobei eine Tür 6 mit Verkleidung vorhanden ist, die in jeder beliebigen Stellung geöffnet und geschlossen werden kann. Es ist nicht näher dargestellt, welche Schwenkachsen und welche Türantriebe für die Tür 6 erforderlich sind, um die Tür zu öffnen und zu schließen.

Im Innenraum der Fahrkabine 2 ist jedenfalls Platz für den Fahrer 4 und einen dahinter sitzenden Beifahrer 5.

Die Fahrkabine 2 weist üblicherweise eine Windschutzscheibe 3 auf, und im vorderen Bereich ist ein Vorderlicht 21 angeordnet und im hinteren Teil ein Rücklicht 20.

Die Fahrkabine 2 sitzt auf einem Fahrwerk 7 eines einspurigen Fahrzeuges auf, welches bevorzugt als Leichtkraftrad oder als Motorrad ausgebildet ist. In an sich bekannter Weise weist dieses Fahrwerk 7 ein über eine Vorderradschwinge abgefedertes Vorderrad 8 auf, welches lenkbar ist, und im hinteren Teil ein Hinterrad 9, welches über einen Motor 12 angetrieben ist und eine Hinterradschwinge 10 mit einem Stoßdämpfer 11 aufweist.

Wichtig ist bei der Ausbildung des Straßenfahrzeuges 1 als einspuriges Fahrzeug, dass der Fahrer 4 die Möglichkeit hat, bei der Unterschreitung einer bestimmten Mindestgeschwindigkeit das Straßenfahrzeug auf der Straße zu stabilisieren, dass es nicht umfällt. Es könnten zwar Stützräder vorgesehen werden, aber derartige Stützräder sind schwierig zu betätigen und vergrößern das Gewicht des Fahrzeuges, was nicht für alle Betriebszustände günstig, weil bei Schräglagen des Straßenfahrzeuges 1 möglicherweise das Stützrad an der schrägen Seite nicht ausgefahren werden kann.

Zu diesem Zweck sieht die Erfindung vor, dass an der Bodenseite der Fahrkabine 2 mindestens eine Verschlusskappe 13 angeordnet ist, die federbelastet in Schließstellung gehalten wird und die in Richtung der Längsachse des Fahrzeuges in den Pfeilrichtungen 17 verschiebbar ausgebildet ist.

Dabei ist diese Verschlusskappe 13 auf einer Schiene 16 verschiebbar geführt, wobei beispielsweise der Verschiebeantrieb über einen Seilzug und eine Feder erfolgt.

Der Betätigung der Verschlusskappe 13 wird also in Abbildung 1.1 angegebenen Stellung eine Öffnung 14 an der Unterseite der Fahrkabine 2 freigemacht, durch welche der Fahrer 4 sein Bein 15 nach unten auf die Straße abstellen kann, um das Straßenfahrzeug 1 vor dem Kippen zu bewahren.

Sobald eine gewisse Geschwindigkeit überschritten wird, wird die Verschlusskappe 13 durch den Motor und den Seilzug in die Schließstellung gebracht, wie dies in der Abbildung 1.2 angegeben ist. Die Verschlusskappe 13' verschließt dann die Öffnung 14.

Sobald jedoch das Straßenfahrzeug 1 eine gewisse Mindestgeschwindigkeit unterschreitet oder ein Nothalt eintritt, löst ein Sensor der Verschlusskappe 13 aus, die damit unter der Last einer Feder schlagartig in die Offenstellung gefahren wird. Auf diese Weise hat der Fahrer 4 immer die Möglichkeit, rechtzeitig sein Bein auf die Fahrbahn zu bringen, um das Straßenfahrzeug 1 vor dem Abkippen zu bewahren.

Selbstverständlich ist die Beschreibung, dass der Fahrer 4 sein Bein 15 auf die Straße bringt, um das Straßenfahrzeug vor dem Abkippen zu bewahren, nur beispielhaft zu verstehen.

In einer anderen Ausgestaltung kann es vorgesehen sein, dass statt des Beins 15 des Fahrers 4 ein elektromagnetischer Stützfuß, ein Teleskopfuß oder ein anderes mechanisches Abstützelement auf die Straßenoberfläche gebracht wird, um das Straßenfahrzeug 1 vor dem Abkippen zu bewahren.

Die Abbildung 2 zeigt nun das Fluggerät 25, welches im gezeigten Ausführungsbeispiel als Schubpropeller ausgebildet ist, weil es eine Luftschraube 36 aufweist, die einen nach hinten gerichteten Luftstrom erzeugt, wobei die Luftschraube 36 von einem Flugantrieb 35 angetrieben ist.

Im gezeigten Ausführungsbeispiel ist der Flugantrieb 35 als Kolben-Verbrennungsmotor ausgebildet. Stattdessen kann natürlich auch ein Drehkolbenmotor oder ein Elektromotor oder ein Strahlantrieb oder ein Turbogrobantrieb verwendet werden.

Allgemein kann also die Luftschraube 36 durch eine Turbine ersetzt sein.

Wichtig an dem Fluggerät 25 ist sein leichter Aufbau, wie es sich aus den Abbildungen 2, 2.1 und 2.2 ergibt.

Es weist eine vordere Koppelvorrichtung 26 auf, die aus zwei parallelen Koppelhörnern 27 besteht, die parallel und im gegenseitigen Abstand zueinander angeordnet sind, wie dies die Abbildung 2.1 zeigt. Diese Koppelhörner 27 bilden Koppelflächen 18 auf der Unterseite der Fahrkabine 2 und sind dort fest mit der Fahrkabine gekoppelt, weil die Fahrkabine damit untergriffen ist.

Ferner sind weitere Koppelflächen 19 an der Rückseite der Fahrkabine 2 ausgebildet, um auch die übrigen Teile der Koppelvorrichtung 26 an der Rückseite der Fahrkabine 2 ankoppeln zu können. Zum Koppelmechanismus wird noch in Bezug auf die Abbildung 3 eingegangen.

In Abbildung 2, 2.1 und 2.2 ist ferner zu erkennen, dass an den Flugzeugholmen 38 seitlich die Flügel 30 ansetzen, sodass der Motorenteil 34 auf den Flugzeugholm 38 erhöht angebracht ist.

An der Unterseite der Flugzeugholme 38 ist jeweils ein Stützrad 37 und die Flugzeugholme 38 erstrecken sich nach hinten und bilden dort das Heckleitwerk 39 zusammen mit dem Höhenleitwerk 40 und den Seitenleitwerken 41 aus.

Die Koppelvorrichtung 26 weist im Übrigen neben den parallel miteinander verlaufenden Koppelhörnern 27 eine untere Koppelwanne 31 auf, wie dies in der Abbildung 2.1 beschrieben ist, die dazu dient, die beiden Koppelhörner 27 miteinander zu verbinden, um einen stabilen Verbund mit dem Straßenfahrzeug 1 zu erreichen.

Wichtig ist, dass an der Oberseite der Koppelvorrichtung 26 der Gashebel 29 und der Steuerknüppel 28 angeordnet sind und dass beim Ankoppeln diese Bedienungselemente in die Fahrgastkabine hineinragen und gemäß Abbildung 2.1 von dem Fahrer mit der linken und der rechten Hand betätigt werden können.

In Abbildung 3.1, 3.2, 3.3 ist nun ein solcher Koppelvorgang näher beschrieben. Hierbei ist gemäß Abbildung 3.1 erkennbar, dass die beiden Teile 1, 24 in den Pfeilrichtungen 22 gegeneinander geführt werden, um so die Koppelvorrichtung 26 unterhalb der Fahrkabine 2 einzuführen, wie dies in der Abbildung 3.2 dargestellt ist. Während des Koppelvorganges ist das Straßenfahrzeug 1 bevorzugt durch einen Ständer 23 auf der Straße abgestützt, um ein Umfallen zu vermeiden.

Gemäß Abbildung 3.2 wird somit die Koppelvorrichtung 26 unter die Fahrkabine 2 des Straßenfahrzeuges 1 gefahren und wird dann in Pfeilrichtung 24 nach oben geschwenkt, um so die einander zugeordneten Koppelflächen in Eingriff zu bringen.

Die hintere Kopplung wird bevorzugt über zwei einander gegenüberliegende Kupplungen 43 getätigt, wobei der eine Kupplungsteil an dem Straßenfahrzeug und der andere Kupplungsteil an dem Motorenteil 34 angeordnet ist.

Nach erfolgter Kopplung der beiden Teile wird gemäß Abbildung 3.3 damit ein fertiges Leichtflugzeug 45 geschaffen, welches ausgezeichnet flugfähig ist.

Hierbei kann es offen bleiben, ob für einen Start noch der Antrieb des Hinterrades 9 des Straßenfahrzeuges 1 benutzt wird oder ob der Antrieb außer Kraft gesetzt wird. Ebenso kann es vorgesehen sein, dass die gesamte Heckschwinge mit dem Hinterrad 9 in dem Betrieb als Leichtflugzeug hochgeklappt wird, um das Hinterrad außer Eingriff mit dem Erdboden zu bringen.

Im gezeigten Ausführungsbeispiel werden dann nur das Hauptfahrwerk 32 mit den Rädern 33 die Abstützung gegenüber dem Erdboden übernehmen, wobei vom Straßenfahrzeug lediglich lastübertragend das Vorderrad 8 verwendet wird.

Ebenso ist es möglich, das Hauptfahrwerk 32 mit den Rädern 33 hochschwenkbar und absenkbar auszugestalten, wie es bei Flugzeugen an sich bekannt ist.

Die Kopplung eines Straßenfahrzeuges mit auf dem Erdboden abgesenkten Vorderrad 8 und dem Hinterrad 9 und einem heb- und senkbaren Hauptfahrwerk 32 hat den weiteren Vorteil, dass bei Versagen des Hubantriebs des Hauptfahrwerkes 32 dennoch das Leichtflugzeug 45 sicher gelandet werden kann, weil das Vorderrad 8 und das Hinterrad 9 die entsprechende Abstützung gegenüber der Landebahn übernehmen.

Vorteil des Fluggerätes 25 ist, dass es getrennt von dem Straßenfahrzeug gelagert und aufbewahrt werden kann, wobei gemäß Abbildung 4 eine Plane 44 den empfindlichen Teil des Fluggerätes abdeckt.

Anhand der Abbildung 3.2 wird noch darauf hingewiesen, dass die Koppelvorrichtung 26 durch eine bodenseitige Öffnung 42 in der Fahrkabine 2 in diese Fahrkabine eingeschwenkt wird. Hier ist in Pfeilrichtung 24 in der Abbildung 3.2 angegeben.

Gemäß Abbildung 5 kann als Alternative zu dem Leichtflugzeug 45 auch andere Fluggeräte geschaffen werden. Die Abbildung 5 zeigt hierbei einen Drehflügel 46, der aus einem Drehflügel 47 besteht, der nicht angetrieben ist und der in an sich bekannter Weise ein Heckleitwerk 39 aufweist. Der Drehantrieb des Drehflügels 47 erfolgt lediglich durch den Vorschub des gesamten Drehflügels 46.

Als alternative Ausführungsform kann das Fluggerät auch als Hubschrauber 50 ausgebildet sein, wobei über einen Antriebsmotor 35 angetriebener Rotor 48 so gesehen ist, dem ein ebenfalls angetriebener Heckrotor 49 angeordnet ist. Wichtig bei allen Ausführungsformen ist, dass ein besonders leichtes Luftfahrzeug geschaffen wird, welches mit leicht zu erhaltenen Flugscheinen betrieben werden kann, ohne dass es einer großen Flugprüfung bedarf, und deshalb sind solche Fluggeräte für eine Vielzahl von Personen verwendbar. Solche leichten Fluggeräte sind deshalb nicht nur für militärische und private Zwecke einsetzbar, sondern auch für Polizeiaufgaben, für Überwachungsaufgaben und für alle anderen Aufgaben, für die an und für sich Leichtflugzeuge geeignet sind.

Hier bei der Erfindung besteht jedoch der Vorteil, dass die Trennung zwischen dem Straßenfahrzeug 1 und dem Fluggerät 25 dazu führt, dass ein Straßenfahrzeug 1 mit einem beliebigen anderen Fluggerät gekoppelt werden kann, was bisher nicht bekannt war. Ein solches kombiniertes Straßenfahrzeug mit einem Fluggerät ist auch für Mondeinsätze gut geeignet, denn das Fluggerät kann an einer geeigneten Stelle gelandet werden, dann wird das Fluggerät abgekoppelt und mit dem Straßenfahrzeug wird zum Ort des Einsatzes gefahren.

Nach erfolgtem Einsatz wird das Straßenfahrzeug wieder zurück zu dem abgestellten Fluggerät gefahren, dort gekoppelt und kann wieder gestartet werden.

Aus diesem Grund kann das leicht manövrierbare Straßenfahrzeug an sehr eng begrenzte Einsatzgebiete gebracht werden, z. B. Tunnels und dergleichen, die mit einem herkömmlichen Fluggerät überhaupt nicht erreichbar sind. In diesem Fall (Tunneleinsatz) wird das Fluggerät außerhalb des Tunnels gelandet, es erfolgt dann eine Entkopplung zwischen Straßenfahrzeug und Fluggerät, und das Straßenfahrzeug kann in dem eng begrenzten Einsatzraum hineingefahren werden und auch wieder herausfahren, was mit herkömmlichen Leichtflugzeugen bisher nicht möglich war.

### Zeichnungslegende

- 1: Straßenfahrzeug (einspurig)
- 2: Fahrkabine
- 3: Windschutzscheibe
- 4: Fahrer
- 5: Beifahrer (Passagier)
- 6: Tür mit Verkleidung
- 7: Fahrwerk
- 8: Vorderrad (lenkbar)
- 9: Hinterrad
- 10: Schwinge
- 11: Stoßdämpfer
- 12: Motor
- 13: Verschlussklappe 13'
- 14: Öffnung
- 15: Bein
- 16: Schiene
- 17: Pfeilrichtungen
- 18: Koppelfläche
- 19: Koppelfläche
- 20: Rücklicht
- 21: Vorderlicht
- 22: Pfeilrichtung
- 23: Ständer
- 24: Pfeilrichtung
- 25: Fluggerät
- 26: Koppelvorrichtung
- 27: Koppelhorn (doppelt)
- 28: Steuerknüppel
- 29: Gashebel
- 30: Flügel
- 31: Koppelwanne
- 32: Hauptfahrwerk
- 33: Rad
- 34: Motorenteil
- 35: Flugantrieb
- 36: Luftschraube
- 37: Stützrad (doppelt)
- 38: Flugzeugholm
- 39: Heckleitwerk
- 40: Höhenleitwerk
- 41: Seitenleitwerke
- 42: Öffnung
- 43: Kupplung
- 44: Plane
- 45: Leichtflugzeug
- 46: Drehflügler
- 47: Drehflügel
- 48: Rotor
- 49: Heckrotor
- 50: Hubschraube

## Patentansprüche

1. Fahrzeug geeignet sowohl als Straßen- als auch Luftfahrzeug, welches zwei miteinander koppelbare Einheiten umfasst, wobei eine erste Einheit ein Straßenfahrzeug (1) ausbildet, welches eine Fahrkabine (2) aufweist, die das Straßenfahrzeuges (1) weitgehend umfassend verkleidet und umschließt und eine zweite Einheit als Fluggerät (25) ausgebildet ist, welches an seinem vorderen freien Ende eine Koppelvorrichtung (26) aufweist, welche durch mindestens eine bodenseitige Öffnung (42) in der Fahrerkabine (2) in die Fahrerkabine (2) einschwenkbar ist, **dadurch gekennzeichnet, dass** das Straßenfahrzeug (1) einspurig ausgebildet ist.

2. Fahrzeug nach Anspruch 1, **dadurch gekennzeichnet, dass** sowohl dem Straßenfahrzeug (1) ein eigener Antriebsmotor (12), als auch dem Fluggerät (25) ein eigener Antriebsmotor (35) zugeordnet ist.

3. Fahrzeug nach einem der Ansprüche 1 oder 2, **dadurch gekennzeichnet, dass** die für den Flugbetrieb notwendigen Teile alle im Fluggerät (25) integriert sind, einschließlich Steuerknüppel und Gashebel, und nach dem Ankoppeln des Fluggerätes (25) an das Straßenfahrzeug (1) so in dem Straßenfahrzeug (1) integriert sind, dass sie für den Fahrer des Straßenfahrzeuges (1) leicht bedienbar sind.

4. Fahrzeug nach einem der Ansprüche 1 bis 3, **dadurch gekennzeichnet, dass** die Fahrkabine (2) eine bodenseitige Öffnung (14) für die Beine (15) des Fahrers (4) aufweist, an der eine in Längsrichtung des Straßenfahrzeuges (1) verschiebbar Verschlussklappe (13) angeordnet ist.

5. Fahrzeug nach Anspruch 4, **dadurch gekennzeichnet, dass** die Verschlussklappe (13) in Abhängigkeit der Fahrsituation des Straßenfahrzeuges (1) unter Federlast schlagartig in die Offenstellung verfahrbar ist.

6. Fahrzeug nach einem der Ansprüche 1 bis 5, **dadurch gekennzeichnet, dass** die Fahrkabine (2) über mindestens eine Tür (6) zum Ein- und Aussteigen (6) verfügt oder als Ganzes zu öffnen ist.

7. Fahrzeug nach einem der Ansprüche 1 bis 6, **dadurch gekennzeichnet, dass** das Fluggerät (25) aus mindestens folgenden Teilen besteht: einer Tragfläche (30) oder Rotor, einem Hauptfahrwerk (32), einem Flugantrieb (35), mindestens einem Leitwerk (40, 41).

8. Fahrzeug nach einem der Ansprüche 1 bis 7, **dadurch gekennzeichnet, dass** die vordere Koppelvorrichtung (26) aus zwei parallelen Koppelhörnern (27) besteht, wobei die Koppelhörner (27) Koppelflächen (18) an der Unterseite der Fahrkabine (2) ausbilden.

9. Fahrzeug nach einem der Ansprüche 1 bis 8, **dadurch gekennzeichnet, dass** an der Rückseite der Fahrkabine (2) eine Koppelfläche (19) mit zwei einander gegenüberliegenden Kupplungen (43) ausgebildet ist, wobei ein Kupplungsteil an dem Straßenfahrzeug (1) und ein Kupplungsteil an dem Motorenteil (34) angeordnet ist.

10. Fahrzeug nach einem der Ansprüche 1 bis 9, **dadurch gekennzeichnet, dass** das Fluggerät (25) über einen eignen Flugantrieb (35), wie z. B. einem Verbrennungsmotor, einem Drehkolbenmotor, einer Strahlturbine oder einem Turbogrobantrieb verfügt.

11. Fahrzeug nach Anspruch 10, **dadurch gekennzeichnet, dass** der Flugantrieb (35) des gekoppelten Fluggerätes (25) entweder eine Luftschraube (36), einen Drehflügel (46,47) oder mindestens einen Rotor (48, 49) antreibt.

12. Fahrzeug nach einem der Ansprüche 1 bis 11, **dadurch gekennzeichnet, dass** an der Oberseite der Koppelvorrichtung (26) ein Gashebel (29) und ein Steuerknüppel (28) angeordnet sind und dass beim Ankoppeln an das Straßenfahrzeug (1) diese Bedienungselemente (28, 29) in die Fahrgastkabine (2) hineinragen.

13. Fahrzeug nach einem der Ansprüche 1 bis 12, **dadurch gekennzeichnet, dass** die Fahrerkabine (2) des Straßenfahrzeug (1) zwei seitliche Öffnungen (42) für Andockseitenholme der Koppelvorrichtung (26) aufweist.

14. Fahrzeug nach einem der Ansprüche 1 bis 13, **dadurch gekennzeichnet, dass** das Fluggerät (25) nur in Kombination mit der ersten Einheit (1) flugfähig ist.

## Claims

1. Vehicle suitable both as a road vehicle and as an aircraft, comprising two units that can be coupled to one another, wherein a first unit forms a road vehicle (1) having a cockpit (2), which substantially completely covers and encloses the road vehicle (1) and a second unit is formed as a flying apparatus (25) which, at its front free end, has a coupling device (26), which can be pivoted though at least one base-side opening (42) in the cockpit (2) into the cockpit (2), **characterised in that** the road vehicle (1) is a single-track vehicle.

2. Vehicle according to claim 1, **characterised in that** the road vehicle (1) is assigned its own drive engine (12) and the flying apparatus (25) is assigned its own drive engine (35).

3. Vehicle according to either of claims 1 or 2, **characterised in that** the parts necessary for flight operation are all integrated in the flying apparatus (25), including the joystick and accelerator, and after the coupling of the flying apparatus (25) to the road vehicle (1), are integrated in the road vehicle (1) in such a way that they can easily be operated by the driver of the road vehicle (1).

4. Vehicle according to any one of claims 1 to 3, **characterised in that** the cockpit (2) has a base-side opening (14) for the legs (15) of the driver (4), a closure flap (13) that can be displaced in the longitudinal direction of the road vehicle (1) being arranged on said opening.

5. Vehicle according to claim 4, **characterised in that** the closure flap (13) can be abruptly moved into the open position under a spring load depending on the driving situation of the road vehicle (1).

6. Vehicle according to any one of claims 1 to 5, **characterised in that** the cockpit (2) has at least one door (6) for climbing in and out (6) or can be opened as a whole.

7. Vehicle according to any one of claims 1 to 6, **characterised in that** the flying apparatus (25) consists of at least the following parts: a wing (30) or rotor, a main landing gear (32), a flight drive (35), at least one tail assembly (40, 41).

8. Vehicle according to any one of claims 1 to 7, **characterised in that** the front coupling device (26) consists of two parallel coupling horns (27), the coupling horns (27) forming coupling faces (18) on the lower side of the cockpit (2).

9. Vehicle according to any one of claims 1 to 8, **characterised in that** a coupling face (19) with two mutually opposing couplings (43) is formed on the rear of the cockpit (2), one coupling part being arranged on the road vehicle (1) and one coupling part being arranged on the engine part (34).

10. Vehicle according to any one of claims 1 to 9, **characterised in that** the flying apparatus (25) has its own flight drive (35), such as, for example, an internal combustion engine, a rotary piston engine, a jet turbine or a turboprop drive.

11. Vehicle according to claim 10, **characterised in that** the flight drive (35) of the coupled flying apparatus (25) either drives an air-screw (36), a rotor blade (46, 47) or at least one rotor (48, 49).

12. Vehicle according to any one of claims 1 to 11, **characterised in that** an accelerator (29) and a joystick (28) are arranged on the upper side of the coupling device (26) and **in that** on coupling to the road vehicle (1), these operating elements (28, 29) project into the passenger compartment (2).

13. Vehicle according to any one of claims 1 to 12, **characterised in that** the cockpit (2) of the road vehicle (1) has two lateral openings (42) for side docking struts of the coupling device (26).

14. Vehicle according to any one of claims 1 to 13, **characterised in that** the flying apparatus (25) is only capable of flying in combination with the first unit (1).

## Revendications

1. Véhicule approprié aussi bien comme véhicule routier que comme véhicule aérien, qui comprend deux unités aptes à être couplées, étant précisé qu'une première unité forme un véhicule routier (1) présentant une cabine de conduite (2) qui recouvre et entoure quasiment le véhicule routier (1), tandis qu'une seconde unité est conçue comme un aéronef (25) présentant à son extrémité libre avant un dispositif de couplage (26) qui est apte à être rentré par pivotement dans la cabine de pilote (2) par une ouverture (42) prévue, côté plancher, dans la cabine (2), **caractérisé en ce que** le véhicule routier (1) est à deux roues alignées l'une derrière l'autre.

2. Véhicule selon la revendication 1, **caractérisé en ce qu'**il est prévu aussi bien un moteur d'entraînement particulier (12) associé au véhicule routier (1) qu'un moteur d'entraînement particulier (35) associé à l'aéronef (25).

3. Véhicule selon l'une des revendications 1 ou 2, **caractérisé en ce que** les éléments nécessaires au vol sont tous intégrés dans l'aéronef (25), y compris le levier de commande et l'accélérateur, et, après le couplage de l'aéronef (25) au véhicule routier (1), sont intégrés dans le véhicule routier (1) de manière à pouvoir être facilement maniés par le conducteur du véhicule routier (1).

4. Véhicule selon l'une des revendications 1 à 3, **caractérisé en ce que** la cabine de conduite (2) présente une ouverture (14), située côté plancher, pour les jambes (15) du conducteur (4), au niveau de laquelle est disposée un volet de fermeture (13) apte à coulisser dans le sens longitudinal du véhicule routier (1).

5. Véhicule selon la revendication 4, **caractérisé en ce que** le volet de fermeture (13) est apte à être amené brusquement dans sa position ouverte grâce à une contrainte de ressort en fonction de la situation de marche du véhicule routier (1).

6. Véhicule selon l'une des revendications 1 à 5, **caractérisé en ce que** la cabine de conduite (2) dispose d'au moins une portière (6) pour que le pilote monte et descende, ou peut s'ouvrir dans son ensemble.

7. Véhicule selon l'une des revendications 1 à 6, **caractérisé en ce que** l'aéronef (25) se compose au moins des éléments suivants : une surface portante (30) ou rotor, un train d'atterrissage principal (32), un entraînement de vol (35), au moins un empennage (40, 41).

8. Véhicule selon l'une des revendications 1 à 7, **caractérisé en ce que** le dispositif de couplage avant (26) se compose de deux bras de couplage parallèles (27), ces bras de couplage (27) formant des surfaces de couplage (18) sur le côté inférieur de la cabine de conduite (2).

9. Véhicule selon l'une des revendications 1 à 8, **caractérisé en ce qu'**à l'arrière de la cabine de conduite (2) est formée une surface de couplage (19) avec deux accouplements opposés (43), étant précisé qu'un élément d'accouplement est disposé sur le véhicule routier (1), et un élément d'accouplement sur l'élément de moteur (34).

10. Véhicule selon l'une des revendications 1 à 9, **caractérisé en ce que** l'aéronef (25) dispose de son propre entraînement de vol (35), comme par exemple un moteur à combustion interne, un moteur à pistons rotatifs, un turboréacteur ou un turboentraînement.

11. Véhicule selon la revendication 10, **caractérisé en ce que** l'entraînement de vol (35) de l'aéronef (25) couplé entraîne une hélice (36), une voilure tournante (46, 47) ou au moins un rotor (48, 49).

12. Véhicule selon l'une des revendications 1 à 11, **caractérisé en ce qu'**il est prévu sur le côté supérieur du dispositif de couplage (26) un accélérateur (29) et un levier de commande (28), et **en ce que** lors du couplage au véhicule routier (1), ces éléments de commande (28, 29) dépassent dans l'habitacle (2).

13. Véhicule selon l'une des revendications 1 à 12, **caractérisé en ce que** la cabine de pilote (2) du véhicule routier (1) présente deux ouvertures latérales (42) pour les éléments latéraux de fixation du dispositif de couplage (26).

14. Véhicule selon l'une des revendications 1 à 13, **caractérisé en ce que** l'aéronef (25) ne peut voler que combiné avec la première unité (1).
